# EUROPEAN PATENT SPECIFICATION

(11) **EP 3 604 119 B1**
(45) Date of publication and mention of the grant of the patent: **09.06.2021**
(21) Application number: 18382579.3
(22) Date of filing: 31.07.2018
(51) Int. Cl.: B64C 1/06, B64C 1/12

(54) **FRAME FOR FUSELAGE SHELLS OF AN AIRCRAFT AND FUSELAGE SHELL**
RAHMEN FÜR RUMPFSCHALEN EINES FLUGZEUGS UND RUMPFSCHALE
CADRE POUR COQUES DE FUSELAGE D'UN AÉRONEF ET COQUE DE FUSELAGE

(43) Date of publication of application: 05.02.2020
(73) Proprietor: Airbus Operations, S.L., 28906 Getafe Madrid (ES)
(72) Inventor: ARÉVALO RODRÍGUEZ, Elena, 28906 Getafe (ES); TORRES ESTEBAN, Antonio, 28906 Getafe (ES)
(74) Representative: Elzaburu S.L.P.

(56) References cited:
- EP-A1- 2 431 175
- DE-A1-102009 013 585
- DE-A1-102009 048 748
- US-A- 4 416 349
- US-A1- 2004 055 248

## Description

### Field of the invention

This invention refers to a fuselage shell of an aircraft.

### Background of the invention

The main structure of a pressurized and un-pressurized fuselage of an aircraft comprises a skin, stringers and frames. The skin is longitudinally stiffened by stringers in order to reduce its thickness and be competitive in weight. Frames prevent the general instability of the fuselage, being adapted to bear local loads.

In addition, in open sections of the fuselage or in highly loaded areas, the structure of the fuselage further comprises structural elements of reinforcement, such as beams, which reinforce and stiffen these areas.

Thus, the most current aircraft fuselage structure used includes, on one hand, skin with integrated stringers (co-bonded or co-cured in case of composite design) and, on the other hand, frames and reinforcing beams. Usually, frames and beams are manufactured separately, and riveted to the fuselage skin with the integrated stringers.

So, the basic fuselage structure is essentially a single cell thin walled tube with many transverse frames and longitudinal stringers. It is essentially a beam structure subjected to bending, torsional and axial forces. Regarding rear fuselage, this is a double curvature tapered section, containing several cutouts and subjected to large concentrated forces from horizontal and vertical stabilizers.

The current state of the art for the design of fuselage shells considers two types of frames: differential frames (Z-shape frames + a shear tie) or integral frames (transversal sections can be C-shaped, Z-shaped and I-shaped, each of them with circumferential stiffener or not).

As it can be observed, all state of the art frame sections have a web perpendicular or almost perpendicular to the skin and two flanges perpendicular or almost perpendicular to such a web, defined as inner and outer flanges, the latter being riveted to the skin.

As it has already been mentioned, the main structural function of frames is to prevent general instabilities in the fuselage (contour frames), sometimes being adapted to withstand local loads introductions (high loaded frames).

Additionally, contour frames have a plurality of cleats along the whole length to prevent lateral instability of the frame. These cleats are riveted to the frame web and to stringers, impacting these assembly operations in the total cost of the fuselage shell.

WO 2011/000987 A1 relates to a reinforcing frame for an aircraft fuselage, the frame comprising a structural member and a closed, internally hollow honeycomb member, the structural member comprising a lower base which is arranged on the inner face of the skin of the fuselage, and through which the stringers connecting the frames to the rest of the structure of the fuselage pass, and upper reinforcing members on which the mentioned honeycomb members are arranged, such that the honeycomb members increase the inertia and the stiffness of the frame without adding weight thereto, the frame having high stiffness in the transverse direction, in addition to being intrinsically stable to local buckling.

US 2013/0115404 A1 refers to a lightweight structure, particularly a primary aircraft structure or a subassembly, as well as to a method for the manufacture thereof. A lightweight structure is at least sectionally composed of a plurality of connected mosaic elements and/or skin mosaic elements. The lightweight structure allows an essentially load-appropriate arrangement of the mosaic elements and/or the skin mosaic elements including the optional skin. The lightweight structure requires a significantly reduced number of connecting elements, such that the assembly effort can be reduced and an additional weight reduction can be achieved. Also, two variations of a method for manufacturing a lightweight structure are provided. Large-format lightweight structures such as, for example, an aircraft fuselage cell or partial shells thereof can also be manufactured in a reliable and dimensionally accurate fashion because only mosaic elements and skin mosaic elements, with relatively small dimensions, need to be handled. Other applications of the lightweight structure include launch vehicles, rocket stages, space stations, space station modules, satellites and masts or towers of wind power plants.

US 2004/055248 A1 refers to internally stiffened composite panels and associated manufacturing methods. An internally stiffened composite panel includes a first face sheet, a second face sheet offset from the first face sheet, and at least one core portion sandwiched between the first and second face sheets. In one aspect, the composite panel further includes a stiffener disposed between the first and second face sheets adjacent to the core portion. The stiffener can have a first attachment portion attached to the first face sheet, a second attachment portion attached to the second face sheet, and an intermediate portion extending between the first and second attachment portions. One or both of the first and second attachment portions is configured to engage a fastener, such as a blind fastener, for attaching a part to the composite panel.

Many of the prior art configurations have a number of drawbacks, for example:
- Complex manufacturing process and tooling are needed to integrate contour frames together with the skin and stringers in a one shot manufacturing process (for composite thermoset material application). For this reason, in prior art configurations, contour frames are usually riveted in a subsequent assembly phase, which has an impact on cost.
- Several cleats are needed to stabilize the contour frame, which means assembly time and therefore cost.
- Complex tolerance management between fuselage shells (for example between the upper and lower fuselage shells), because of the connection of the webs of the frames in YZ plane.
- Contour frames must be divided in different sectors in order to make the frame assembly feasible. A joint between these sectors is needed (coupling), which is carried out by means of different pieces which connect both frame sectors (inner flange, web and middle flange when the latter exists). All these coupling pieces and their subsequent assembly operations entail an important cost impact.

### Summary of the invention

The object of the present invention is to provide a fuselage shell of an aircraft that overcomes the drawbacks existing in the prior art frames.

The invention provides a fuselage shell of an aircraft, the fuselage comprising a skin and stringers, the frame comprising:
- a plurality of sections, the sections being separated by intermediate gaps corresponding to the position of the stringers in the fuselage, each section having a multi-cell configuration constituted by several modular longitudinal elements of composite material arranged in the transversal direction of the fuselage, and
- a continuous inner cap on top of the sections and the intermediate gaps.

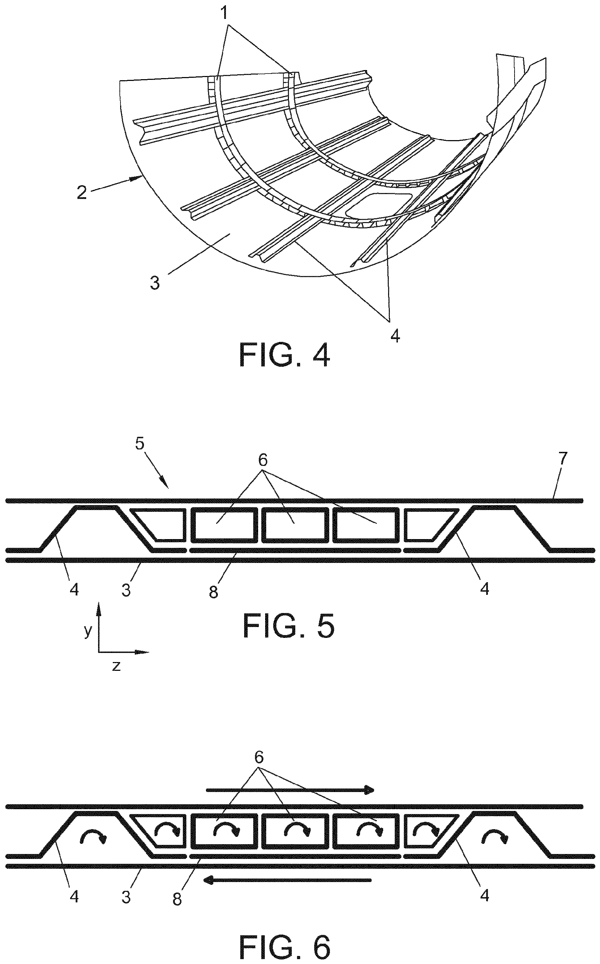

The described configuration of the frame for fuselage shells of an aircraft of the invention provides the following advantages:
- There is no web in YZ plane. It is substituted by a multi-cell configuration in transversal direction. That implies a reduced complexity in tooling and manufacturing process due to the existence of longitudinal elements only.
- There are no stabilization cleats in frames, as the new design makes them unnecessary.
- Cost reduction solution because of the high integration (no subsequent assembly operations needed).
- No frames coupling needed.
- Rivet-less fuselage shell. The aim of this concept is to obtain the whole fuselage shell in a one-shot manufacturing process (skin, stringers and frames).
- Modules standardization is possible, to get further benefits from cost and lead time viewpoint.
- Easier tolerance management in X-direction. If the fuselage section is split in shells, in the areas where the shells must be connected, it is needed to join the inner caps only (which act as inner flanges of the frame; see figure 4).

Other characteristics and advantages of the present invention will be clear from the following detailed description of several embodiments illustrative of its object in relation to the attached figures.

### Brief description of drawings

Figure 1 shows typical configurations of prior art frames.
Figure 2 shows the load distribution in prior art frames.
Figure 3 shows a prior art frame with cleats riveted to the frame web and to the stringers.
Figure 4 shows an embodiment of a fuselage shell with frames according to the invention.
Figure 5 shows a section of a frame of the invention, assembled with a skin and stringers.
Figure 6 shows the load distribution in the section of a frame of the invention.
Figures 7 to 11 show several embodiments of sections of the frame of the invention.
Figure 12 shows the transversal section constant in width of a frame of the invention.
Figure 13 shows the transversal section variable in width of a frame of the invention.
Figure 14 shows examples of different connections between the stringers and the modular elements of the frame of the invention.

### Detailed description of the invention

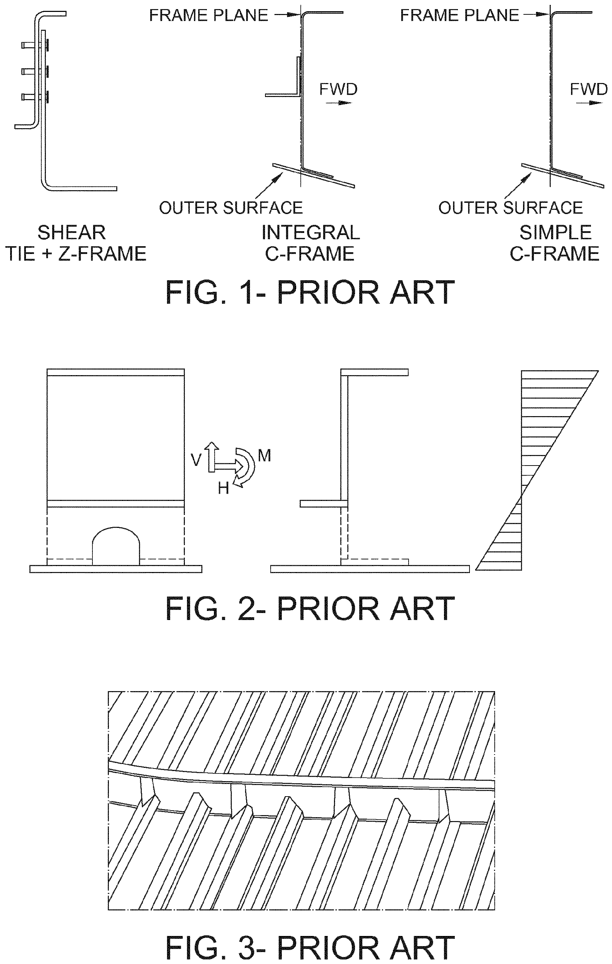

Figure 1 shows typical configurations of prior art frames already described, and figure 2 shows the load distribution in prior art frames.

This invention refers mainly to contour frames. The typical loads carried by these structural elements are summarized in figure 2, wherein M refers to the Moment, V to the Vertical Load and H to the Horizontal Load.

As it can be seen in figure 2, the frames together with the skin act as curved beams, carrying mainly axial loads (in the circumferential direction) in the most extreme elements of the transversal section (skin and inner flanges), and the web withstanding shear loads mainly. The image on the right corresponds to the force diagram.

Figure 3 shows a prior art frame with cleats riveted to the frame web and to the stringers.

Figure 4 shows an embodiment of a fuselage shell 2 with frames 1 according to the invention. The fuselage shell 2 comprises a skin 3, longitudinal stringers 4 and transversal frames 1, the frames 1 being joined to the inner face of the skin 3. The frames 1 in figure 4 have a configuration according to the invention, and figures 5 to 11 show some embodiments of sections of same. Figure 5, for example, shows a section of a frame 1 of the invention, assembled with a skin 3 and stringers 4.

The frames 1 shown in figure 4 comprise:
- a plurality of sections 5 (like the one shown in figure 5), the sections being separated by intermediate gaps corresponding to the position of the stringers 4 in the fuselage, each section having a multi-cell configuration constituted by several modular elements 6 of composite material arranged in the transversal direction of the fuselage, and
- a continuous inner cap 7 on top of the sections 5 and the intermediate gaps.

The inner cap 7 is a continuous structural element, preferably a continuous strap placed on the sections and the intermediate gaps, and it can have a circumferential shape if the fuselage has also a circumferential shape.

The modular elements 6 in the section 5 of the frame 1 can all have the same shape or, alternatively, some of them can have a different shape.

As it can be seen in figure 6, the axial (circumferential) load, as in the prior art, is withstood by the inner cap 7 (which acts like the inner flange of the frame 1) and the skin 3. These two elements (inner cap 7 and skin 3) are connected by the modular elements 6 or cells of the multi-cell configuration, which react the moment in torsion, as figure 6 shows.

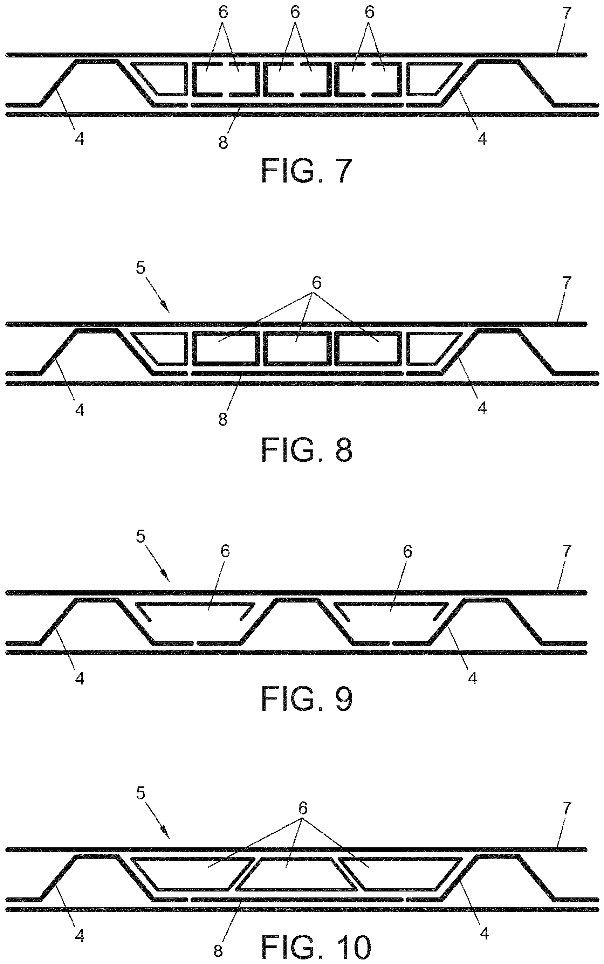

Multi-cells can be obtained by different preform designs: C-shaped, tubes, omega-shaped, etc. Figures 7 to 10 show several embodiments of sections of the frame 1 of the invention, placed between two omega stringers, one on each side.

Figure 7 includes several C-shaped modular elements 6.

Figure 8 includes several modular elements 6 with longitudinal section of rectangular shape (or tube shape).

Figure 9 includes some modular elements 6 with longitudinal section with the shape of an open polygonal line.

Figure 10 includes several omega-shaped modular elements 6.

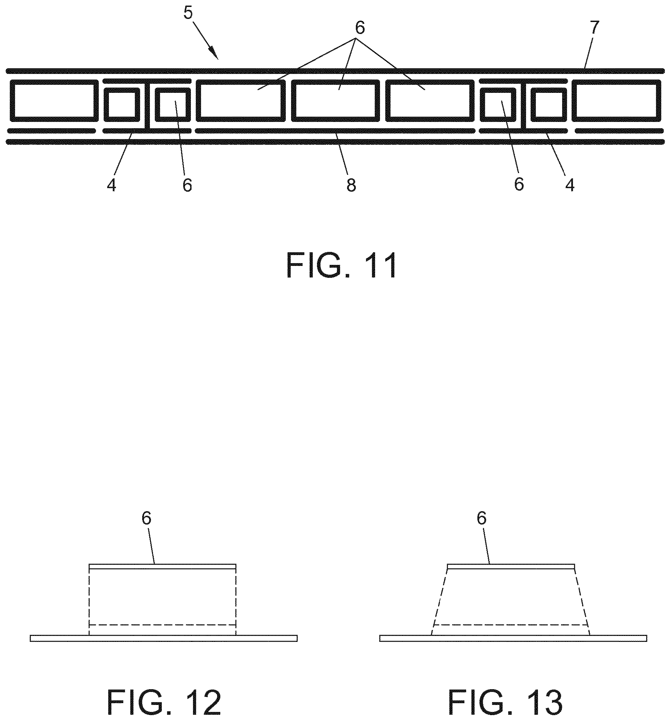

Figure 11 shows an embodiment of a section of the frame 1 of the invention, placed between two I stringers 4, one on each side. In this embodiment some of the modular elements 6 have rectangular shape and some have square shape.

As shown in figures 12 and 13, the transversal section can be variable in width, so the design can be enlarged in some areas if it is required.

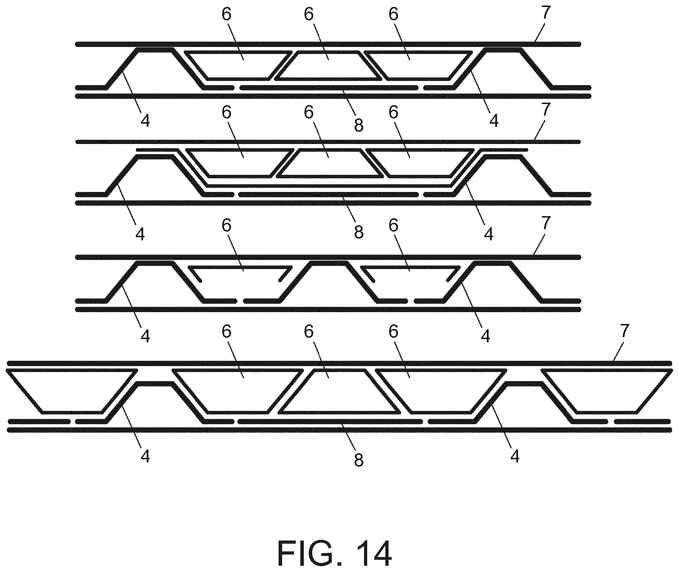

Figure 14 shows examples of different types of connections between the stringers 4 and the modular elements 6 of the section of the frame 1.

The connection of the modular elements 6 between themselves and with the inner cap 7 and the skin 3 is also to be taken into account. The outer surface of the modular elements 6 is connected to the skin 3 (directly or through the connecting element 8), and the inner surface of the modular elements 6 is connected the inner cap 7. In order to make a continuous piece, the unions can be co-cured or co-bonded.

The modular elements 6 can be manufactured separately, then joined together and with the fuselage, and a final cure can be given to obtain a continuous piece.

At least one section 5 of the frame 1 can additionally comprise a connecting element 8 between the modular elements 6 and the skin 3 of the fuselage shell 2. These connecting elements 8 can give continuity to the flanges of the stringers 4. In the embodiments of figures 7 and 8 the connecting elements 8 can be removed, so that the modular elements 6 would be higher and could be in direct contact with the skin 3.

The standardization of the modular elements 6 (i.e., the possibility of having modular elements of the same size and shape) brings several advantages. For instance, it allows having a continuous surface between the stringers 4 in which to place the modular elements 6, which makes it easier to design and assemble them. For example, in figure 10 the modular elements 6 with omega section (trapezium section) can be mounted in the indicated arrangement to suit the space between the stringers 4.

The fuselage shell 2 for an aircraft according to the invention comprises a skin 3, longitudinal stringers 4 and transversal frames 1 (see figure 4). These frames 1 can be of any of the embodiments previously described.

Preferably, the skin 3, the stringers 4 and the frames 1 are made in a one-shot manufacturing process, forming a single piece. In this way the modular elements 6 and the inner cap 7 form a single piece with the skin 3 and the stringers 4, which is clearly advantageous over the prior art.

Although the present invention has been fully described in connection with preferred embodiments, it is evident that modifications may be introduced within the scope thereof, not considering this as limited by these embodiments, but by the contents of the following claims.

## Claims

1. Fuselage shell (2) for an aircraft, comprising a skin (3), longitudinal stringers (4) and transversal frames (1), **characterized in that** the frames (1) comprise a plurality of sections (5), the sections (5) being separated by intermediate gaps corresponding to the position of the stringers (4) in the fuselage, each section (5) having a multi-cell configuration constituted by several modular longitudinal elements (6) of composite material arranged in the transversal direction of the fuselage, and **in that** the frames (1) also comprise an inner cap (7) on top of the sections (5) and the intermediate gaps.

2. Fuselage shell (2) for an aircraft, according to claim 1, wherein the inner cap (7) on top of the sections (5) and the intermediate gaps is a strap.

3. Fuselage shell (2) for an aircraft, according to claim 2, wherein the strap has a circumferential shape.

4. Fuselage shell (2) for an aircraft according to any of the previous claims, wherein all the modular elements (6) have the same shape.

5. Fuselage shell (2) for an aircraft according to any of the previous claims, wherein the modular elements (6) have a rectangular longitudinal section.

6. Fuselage shell (2) for an aircraft according to any of claims 1 to 4, wherein the modular elements (6) have an omega-shaped longitudinal section.

7. Fuselage shell (2) for an aircraft according to any of claims 1 to 3, wherein not all the modular elements (6) have the same shape.

8. Fuselage shell (2) for an aircraft according to any of claims 1 to 3, wherein at least some of the modular elements (6) have a C-shaped longitudinal section.

9. Fuselage shell (2) for an aircraft according to any of the previous claims, wherein at least some of the modular elements (6) have a transversal section that is constant in width.

10. Fuselage shell (2) for an aircraft according to any of claims 1 to 8, wherein at least some of the modular elements (6) have a transversal section that is variable in width.

11. Fuselage shell (2) for an aircraft according to any of claims 1 to 10, wherein at least one section (5) additionally comprises a connecting element (8) between the modular elements (6) and the skin (3) of the fuselage shell (2).

12. Fuselage shell (2) for an aircraft, according to any of claims 1 to 11, wherein the skin (3), the stringers (4) and the frames (1) are made in a one-shot manufacturing process, forming a single piece.

## Patentansprüche

1. Rumpfschale (2) für ein Flugzeug, eine Außenhaut (3), in Längsrichtung verlaufende Stringer (4) und in Querrichtung verlaufende Rahmen (1) umfassend, **dadurch gekennzeichnet, dass** die Rahmen (1) mehrere Abschnitte (5) umfassen, wobei die Abschnitte (5) durch Zwischenspalte getrennt sind, die der Position der Stringer (4) im Rumpf entsprechen, wobei jeder Abschnitt (5) eine Mehrzellenkonfiguration aufweist, die aus mehreren modularen Längselementen (6) aus Verbundmaterial, die im Querrichtung des Rumpfs angeordnet sind, besteht, und dadurch, dass die Rahmen (1) außerdem eine Innenkappe (7) auf den Abschnitten (5) und Zwischenspalten umfassen.

2. Rumpfschale (2) für ein Flugzeug nach Anspruch 1, wobei die Innenkappe (7) auf den Abschnitten (5) und Zwischenspalten ein Gurt ist.

3. Rumpfschale (2) für ein Flugzeug nach Anspruch 2, wobei der Gurt eine umlaufende Form aufweist.

4. Rumpfschale (2) für ein Flugzeug nach einem der vorstehenden Ansprüche, wobei alle modularen Elemente (6) dieselbe Form aufweisen.

5. Rumpfschale (2) für ein Flugzeug nach einem der vorstehenden Ansprüche, wobei die modularen Elemente (6) einen rechteckigen Längsquerschnitt aufweisen.

6. Rumpfschale (2) für ein Flugzeug nach einem der Ansprüche 1 bis 4, wobei die modularen Elemente (6) einen Omega-förmigen Längsquerschnitt aufweisen.

7. Rumpfschale (2) für ein Flugzeug nach einem der Ansprüche 1 bis 3, wobei nicht alle modularen Elemente (6) dieselbe Form aufweisen.

8. Rumpfschale (2) für ein Flugzeug nach einem der Ansprüche 1 bis 3, wobei zumindest einige der modularen Elemente (6) einen C-förmigen Längsquerschnitt aufweisen.

9. Rumpfschale (2) für ein Flugzeug nach einem der vorstehenden Ansprüche, wobei zumindest einige der modularen Elemente (6) einen in Querrichtung verlaufenden Querschnitt mit einer konstanten Breite aufweisen.

10. Rumpfschale (2) für ein Flugzeug nach einem der Ansprüche 1 bis 8, wobei zumindest einige der modularen Elemente (6) einen in Querrichtung verlaufenden Querschnitt mit einer variablen Breite aufweisen.

11. Rumpfschale (2) für ein Flugzeug nach einem der Ansprüche 1 bis 10, wobei zumindest ein Abschnitt (5) zusätzlich ein Verbindungselement (8) zwischen den modularen Elementen (6) und der Außenhaut (3) der Rumpfschale (2) umfasst.

12. Rumpfschale (2) für ein Flugzeug nach einem der Ansprüche 1 bis 11, wobei die Außenhaut (3), die Stringer (4) und die Rahmen (1) einstückig gefertigt sind.

## Revendications

1. Coque de fuselage (2) pour aéronef, comprenant un revêtement (3), des lisses (4) longitudinales et des cadres transversaux (1), **caractérisée en ce que** les cadres (1) comprennent une pluralité de sections (5), les sections (5) étant séparées par des espaces intermédiaires correspondant à la position des lisses (4) dans le fuselage, chaque section (5) ayant une configuration multi-cellulaire constituée par plusieurs éléments longitudinaux modulaires (6) en matériau composite disposés dans la direction transversale du fuselage, et **en ce que** les cadres (1) comprennent également un capuchon intérieur (7) sur les sections (5) et les espaces intermédiaires.

2. Coque de fuselage (2) pour aéronef, selon la revendication 1, le capuchon intérieur (7) sur les sections (5) et les espaces intermédiaires étant une sangle.

3. Coque de fuselage (2) pour aéronef, selon la revendication 2, la sangle ayant une forme circonférentielle.

4. Coque de fuselage (2) pour aéronef selon l'une quelconque des revendications précédentes, tous les éléments modulaires (6) ayant la même forme.

5. Coque de fuselage (2) pour aéronef selon l'une quelconque des revendications précédentes, les éléments modulaires (6) ayant une section longitudinale rectangulaire.

6. Coque de fuselage (2) pour aéronef selon l'une quelconque des revendications 1 à 4, les éléments modulaires (6) ayant une section longitudinale en forme d'oméga.

7. Coque de fuselage (2) pour aéronef selon l'une quelconque des revendications 1 à 3, tous les éléments modulaires (6) n'ayant pas la même forme.

8. Coque de fuselage (2) pour aéronef selon l'une quelconque des revendications 1 à 3, au moins certains des éléments modulaires (6) ayant une section longitudinale en forme de C.

9. Coque de fuselage (2) pour aéronef selon l'une quelconque des revendications précédentes, au moins certains des éléments modulaires (6) ayant une section transversale de largeur constante.

10. Coque de fuselage (2) pour aéronef selon l'une quelconque des revendications 1 à 8, au moins certains des éléments modulaires (6) ayant une section transversale de largeur variable.

11. Coque de fuselage (2) pour aéronef selon l'une quelconque des revendications 1 à 10, au moins une section (5) comprenant en outre un élément de liaison (8) entre les éléments modulaires (6) et le revêtement (3) de la coque de fuselage (2).

12. Coque de fuselage (2) pour aéronef, selon l'une quelconque des revendications 1 à 11, la peau (3), les lisses (4) et les cadres (1) étant réalisés selon un procédé de fabrication unique, formant une seule pièce.
